# EUROPEAN PATENT APPLICATION

(11) **EP 4 789 795 A1**
(43) Date of publication of application: **12.08.2026**
(21) Application number: 26152111.6
(22) Date of filing: 15.01.2026
(51) Int. Cl.: B22F 3/10, B22F 10/43, B28B 1/00, B33Y 10/00, B33Y 40/20, B33Y 70/00, B22F 10/14

(54) **PRODUCTION METHOD OF THREE-DIMENSIONAL OBJECT**

(30) Priority: 20.01.2025 JP 2025007923; 26.09.2025 JP 2025159871
(71) Applicant: Ricoh Company, Ltd., Tokyo 143-8555 (JP)
(72) Inventor: MATSUMURA, Takashi, Tokyo, 143-8555 (JP); SATOH, Tatsuya, Tokyo, 143-8555 (JP); YAMAGUCHI, Daichi, Tokyo, 143-8555 (JP); TSUJI, Masato, Tokyo, 143-8555 (JP)
(74) Representative: SSM Sandmair

(57) **Abstract**

A production method of a three-dimensional object is provided and includes a release layer forming step of forming a release layer between the sintering precursor of the three-dimensional object and the support structure, by an adhesive and a release powder being applied separately; a sintering step of heating the sintering precursor of the three-dimensional object, the support structure, and the release layer, thereby obtaining the sintered body of the three-dimensional object; and a separating step of separating the sintered body of the three-dimensional object and the support structure.

## Description

### BACKGROUND

### 1. Field of the Invention

The present disclosure relates to a production method of a three-dimensional object.

### 2. Description of the Related Art

When producing a three-dimensional object that is a sintered body, a typical method of suppressing deformation of a sintering precursor of the three-dimensional object is, for example, a method of performing sintering in a state in which the sintering precursor of the three-dimensional object is supported by a support structure. Therefore, for preventing adhesion of the sintering precursor of the three-dimensional object to the support structure during sintering, a method of providing a ceramic layer between the sintering precursor of the three-dimensional object and the support structure is known.

PCT Japanese Translation Patent Publication No. 2019-522720 describes forming an interface layer to provide a non-sinterable barrier configured to provide a support that is releasable or removable after sintering. The interface layer is disclosed to be formed by ink-jetting a ceramic-filled slurry onto a support structure.

It is an object of an embodiment of the present disclosure to provide a production method of a three-dimensional object in which adhesion of the three-dimensional object to a support structure during sintering is suppressed, and deformation and/or collapse of the three-dimensional object is prevented.

### SUMMARY

An embodiment of the present disclosure is a production method of a three-dimensional object. The production method includes: a release layer forming step of forming a release layer between a sintering precursor of the three-dimensional object and a support structure, by an adhesive and a release powder being applied separately; a sintering step of heating the sintering precursor of the three-dimensional object, the support structure, and the release layer, thereby obtaining the sintered body of the three-dimensional object; and a separating step of separating the sintered body of the three-dimensional object and the support structure.

According to the embodiment of the present disclosure, it is possible to provide a production method of a three-dimensional object in which adhesion of the three-dimensional object to a support structure during sintering is suppressed, and deformation and/or collapse of the three-dimensional object is prevented.

### BRIEF DESCRIPTION OF THE DRAWINGS

FIG. 1 is a schematic diagram for describing an example of a production method of a three-dimensional object according to an embodiment of the present disclosure.
FIG. 2 is a schematic diagram illustrating an example of a combination of a support structure and a sintering precursor of the three-dimensional object in the production method of the three-dimensional object according to the embodiment of the present disclosure.
FIG. 3 is a schematic cross-sectional diagram illustrating a state in which a release layer is formed between the support structure and the sintering precursor of the three-dimensional object illustrated in FIG. 2, and the sintering precursor of the three-dimensional object is disposed over the support structure.
FIG. 4 is a schematic diagram illustrating another example of the combination of the support structure and the sintering precursor of the three-dimensional object in the production method of the three-dimensional object according to the embodiment of the present disclosure.
FIG. 5 is a diagram illustrating a shape of the sintering precursor of the three-dimensional object molded in Examples.
FIG. 6 is a diagram illustrating a shape of a sintering precursor of the support structure molded in the Examples.
FIG. 7 is a schematic diagram illustrating a structure of the support structure (insert) used in the Examples.

### DETAILED DESCRIPTION OF THE PRESENT DISCLOSURE

The production method of the three-dimensional object according to the embodiment of the present disclosure is an invention accomplished in view of the following problems in the related art.

PCT Japanese Translation Patent Publication No. 2019-522720 has a concern that the ceramic-filled slurry permeates into the support structure and the sintering precursor of the three-dimensional object, thereby collapsing the shape of the support structure and the sintering precursor of the three-dimensional object. Also, when the interface layer is formed of the ceramic-filled slurry, ceramic particles do not dissolve, and are not uniformly distributed in the slurry. Thus, the thickness of the interface layer tends to be uneven. The unevenness in the thickness of the interface layer causes problems, such as adhesion of the support structure to the sintering precursor of the three-dimensional object at places where the thickness of the interface layer is small, and collapse of the interface layer at places where the thickness of the interface layer is small.

Hereinafter, the present embodiment will be described in detail.

### (Production Method of Three-Dimensional Object)

A production method of a three-dimensional object of the present embodiment is a production method of a three-dimensional object that is a sintered body. The production method includes: a release layer forming step of forming a release layer between a sintering precursor of the three-dimensional object and a support structure, by an adhesive and a release powder being applied separately; a sintering step of heating the sintering precursor of the three-dimensional object, the support structure, and the release layer, thereby obtaining the sintered body of the three-dimensional object; and a separating step of separating the sintered body of the three-dimensional object and the support structure.

Also, the present embodiment may include other steps in addition to the above steps.

According to the present embodiment, it is possible to provide the production method of the three-dimensional object in which adhesion of the three-dimensional object to the support structure during sintering is suppressed, and deformation and/or collapse of the three-dimensional object is prevented.

### <Three-Dimensional Object>

A three-dimensional object produced by the production method of the three-dimensional object of the present embodiment is a sintered body. The three-dimensional object produced by the production method of the three-dimensional object of the present embodiment is obtained by sintering a sintering precursor that is to be a three-dimensional object. In the present specification, the sintering precursor that is to be the three-dimensional object through sintering may be referred to as a "sintering precursor of a three-dimensional object".

### <Sintered Body and Sintering Precursor>

In the present specification, the term "sintering precursor" refers to a non-sintered solid object containing a powder material and a resin in which the powder material is solidified with the resin. The sintered body is an object formed by compacting, through sintering, of the powder material contained in the sintering precursor. In general, the "sintering precursor" may be referred to as a "green body".

When the sintering precursor has a structure with an inclination (inclined structure) or a structure with a shape having a plurality of recessed/projecting portions, the production method of the three-dimensional object of the present embodiment provides the effects of suppressing adhesion of the three-dimensional object to the support structure during sintering and preventing deformation and/or collapse of the three-dimensional object. The inclined structure of the sintering precursor indicates a structure in which, when the sintering precursor is placed on the ground that is horizontal or on a plane parallel to the ground that is horizontal, the sintering precursor includes a plane that is not parallel or vertical to the ground.

When a ceramic-filled slurry, a ceramic powder bed, or the like is used for the sintering precursor having the structure with the inclination, the ceramic-filled slurry, the ceramic powder bed, or the like flows due to the inclination, raising a problem that the thickness of the release layer containing ceramic is likely to be uneven. According to the production method of the three-dimensional object of the present embodiment, even if the sintering precursor has the structure with the inclination, it is possible to suppress unevenness in the thickness of the release layer. Also, when the sintering precursor has a structure with recessed/projecting portions, the production method of the three-dimensional object of the present embodiment can suppress unevenness in the thickness of the release layer in the recessed/projecting portions.

### <<Powder Material>>

The powder material contained in the sintering precursor may be any powder material as long as the powder material can be molded into the sintering precursor. The powder material may be a powder material having one composition or may be a powder material having two or more different compositions. Also, the powder material contained in the sintering precursor preferably contains a difficult-to-sinter material, and more preferably is a difficult-to-sinter material.

The difficult-to-sinter material refers to a material in which sintering does not readily progress even by being heated. Specifically, the difficult-to-sinter material refers to a material having a very high melting point or solidus temperature, and a typical heater cannot perform a heat treatment at a temperature exceeding such a melting point or solidus temperature. Alternatively, the difficult-to-sinter material refers to a material that has a low melting point or solidus temperature but in which sintering is inhibited by an oxide film formed on the particle surface.

Examples of the difficult-to-sinter material include metals, ceramics, carbides, and the like.

Examples of the metals include aluminum, tungsten, titanium, molybdenum, niobium, zinc, magnesium, calcium, nickel, chromium, manganese, tin, tungsten, vanadium, molybdenum, cadmium, zirconium, antimony, and alloys thereof. Of these, an aluminum alloy is preferable since deformation during sintering is large when liquid-phase sintering is used, and sintering deformation can be suppressed by forming a release layer. Especially, an aluminum alloy easily provides an advantageous effect for a setter using the release layer for holding an overhang (hollow) portion.

Examples of the ceramics include aluminum nitride, alumina, zirconia, silicon nitride, titanium nitride, boron nitride, silicon oxide, titanium oxide, magnesium oxide, calcium oxide, spinel, zirconium boride, titanium boride, tungsten boride, yttrium oxide, calcium phosphate, scandium oxide, tungsten carbide, titanium carbide, chromium carbide, silicon carbide, and the like.

The powder material contained in the sintering precursor preferably has a particle shape, and the shape is spherical, elliptical, or the like.

No particular limitation is imposed on the volume average particle diameter of the powder material contained in the sintering precursor. The volume average particle diameter of the powder material contained in the sintering precursor may be appropriately selected in accordance with the intended purpose. The volume average particle diameter of the powder material contained in the sintering precursor is preferably 0.1 micrometers (µm) or greater and 500 µm or less, more preferably 5 µm or greater and 300 µm or less, and still more preferably 10 µm or greater and 250 µm or less. When the volume average particle diameter of the powder material contained in the sintering precursor is 0.1 µm or greater and 500 µm or less, the production efficiency of the three-dimensional object is excellent, and the handleability of the powder material contained in the sintering precursor is good. When the volume average particle diameter of the powder material contained in the sintering precursor is 500 µm or less, the filling ratio of the powder material in a formed thin layer is improved, and voids, compositional unevenness, and the like are unlikely to occur in the obtained three-dimensional object.

The volume average particle diameter of the powder material contained in the sintering precursor can be measured using a microtrack HRA (available from Nikkiso Co., Ltd.). In the present specification, the powder material contained in the sintering precursor of the three-dimensional object is referred to as a first powder material.

### <<Resin>>

No particular limitation is imposed on the resin contained in the sintering precursor as long as the resin can dissolve in a molding liquid that is to be applied to the powder material at the time of producing the sintering precursor, thereby solidifying or binding the powder material. The resin contained in the sintering precursor may be appropriately selected in accordance with the intended purpose. Examples of the resin include polyvinyl alcohol resins, polyacrylic acid resins, cellulose, starch, gelatin, vinyl resins, amide resins, imide resins, acrylic resins, polyethylene glycol, and the like. These may be used alone or in combination.

The powder material contained in the sintering precursor may be coated by the resin. No particular limitation is imposed on a method of coating the surface of the powder material with the resin. The method of coating the surface of the powder material with the resin may be appropriately selected from publicly known coating methods. Suitable examples of the coating methods include a rolling flow coating method, a spray drying method, a stirring mixing addition method, a dipping method, a kneader coating method, and the like. Also, these coating methods can be performed using various publicly known commercially available coating devices, granulating devices, and the like.

The resin contained in the sintering precursor may be contained in the molding liquid. When the resin is contained in the molding liquid, the sintering precursor is produced by applying the molding liquid to the powder material.

### <Support Structure>

The support structure is a structure configured to support the sintering precursor of the three-dimensional object during sintering. When the support structure supports the sintering precursor of the three-dimensional object, it is possible to suppress undesired deformation of the sintering precursor of the three-dimensional object during sintering. This can form the sintering precursor of the three-dimensional object into a sintered body of the three-dimensional object having a desired shape. No particular limitation is imposed on the support structure, and the support structure may be appropriately selected in accordance with the intended purpose. Examples of the support structure include, for example, a substrate structure, a structure configured to cover the sintering precursor of the three-dimensional object from above, a structure configured to support the sintering precursor of the three-dimensional object from below, a structure configured to support the sintering precursor of the three-dimensional object having a cavity from the cavity side, and a structure configured to support the non-self-standing sintering precursor of the three-dimensional object to stand in an intended direction. The support structure is preferably selected in accordance with the shape of the sintering precursor of the three-dimensional object. The support structure may have, for example, a structure having a mold shape, a structure having a shape close to the mold shape, a shape designed to fill a cavity, or a structure designed to support a portion of or the entirety of the sintering precursor of the three-dimensional object.

In a state in which the sintering precursor of the three-dimensional object is disposed to completely overlap with a structure of the support structure that is to overlap with the sintering precursor of the three-dimensional object, the distance between the surface of the support structure and the surface of the sintering precursor of the three-dimensional object is any distance as long as the molded object can be stably disposed without being displaced from the support structure. The distance between the surface of the support structure and the surface of the sintering precursor of the three-dimensional object is preferably 2 µm or greater and 5 millimeters (mm) or less, and more preferably 100 µm or greater and 1 mm or less.

Also, preferably, the support structure and the sintering precursor of the three-dimensional object are disposed in a positional relationship in which the shapes of portions of the support structure correspond to the shapes of portions of the sintering precursor of the three-dimensional object. For example, when the support structure has a recess corresponding to a projection of the sintering precursor of the three-dimensional object, preferably, the projection of the sintering precursor of the three-dimensional object is fitted into the recess of the support structure having the length of each side closest to the length of a corresponding side of this projection, thereby disposing the sintering precursor of the three-dimensional object over the support structure. Also, when the support structure has a projection corresponding to a recess of the sintering precursor of the three-dimensional object, preferably, the projection of the support structure is fitted into the recess of the sintering precursor of the three-dimensional object having the length of each side closest to the length of a corresponding side of this projection, thereby disposing the sintering precursor of the three-dimensional object over the support structure. Further, when the sintering precursor of the three-dimensional object has a cavity, preferably, the support structure having a shape corresponding to the cavity is disposed such that this support structure is fitted into the cavity of the sintering precursor of the three-dimensional object. Also, when the sintering precursor of the three-dimensional object is not self-standing, preferably, the support structure having a structure designed to support at least a portion of the sintering precursor of the three-dimensional object is disposed such that the support structure supports the sintering precursor of the three-dimensional object to be oriented in an intended direction.

No particular limitation is imposed on the support structure as long as the support structure is not contrary to the object of the present disclosure. The support structure may deform, for example, shrink due to heating. Alternatively, it is acceptable for the support structure not to deform, for example, not to shrink due to heating.

No particular limitation is imposed on a material of the support structure. The material of the support structure may be appropriately selected in accordance with the intended purpose, and may contain a metal, ceramics, a resin, or the like.

Examples of the metal contained in the support structure include aluminum, tungsten, titanium, molybdenum, niobium, zinc, magnesium, calcium, nickel, chromium, manganese, tin, tungsten, vanadium, molybdenum, cadmium, zirconium, antimony, or alloys thereof.

Examples of the ceramics contained in the support structure include aluminum nitride, alumina, zirconia, silicon nitride, titanium nitride, boron nitride, silicon oxide, titanium oxide, magnesium oxide, calcium oxide, spinel, zirconium boride, titanium boride, tungsten boride, yttrium oxide, calcium phosphate, scandium oxide, tungsten carbide, titanium carbide, chromium carbide, silicon carbide, and the like.

As the resin contained in the support structure, it is possible to use a resin used as the resin contained in the sintering precursor. The resin contained in the support structure may be appropriately selected in accordance with the intended purpose. Examples of the resin contained in the support structure include polyvinyl alcohol resins, polyacrylic acid resins, cellulose, starch, gelatin, vinyl resins, amide resins, imide resins, acrylic resins, polyethylene glycol, and the like. These may be used alone or in combination.

When the support structure is a structure that forms into a sintered body from a sintering precursor through sintering, the sintering precursor of the support structure preferably contains the powder material contained in the sintering precursor of the three-dimensional object, and more preferably further contains the resin contained in the sintering precursor of the three-dimensional object. In the present specification, the powder material contained in the sintering precursor of the support structure is referred to as a second powder material, and the resin contained in the sintering precursor of the support structure is referred to as a second resin. The second powder material is preferably the same as the first powder material. When the first powder material and the second powder material are the same, a shrinkage rate due to sintering of the sintering precursor of the three-dimensional object and a shrinkage rate due to sintering of the sintering precursor of the support structure are the same as or close to each other. Therefore, during heating, it is possible to allow the shrinkage rate of the sintering precursor of the three-dimensional object and the shrinkage rate of the sintering precursor of the support structure to be the same as or close to each other. Therefore, during sintering, it is possible to suppress stress concentration, for example, due to friction or the like between the sintering precursor of the three-dimensional object and the sintering precursor of the support structure. Further, undesired deformation of the sintering precursor of the three-dimensional object can be suppressed, and thus this is suitable when the sintering precursor of the three-dimensional object has a complicated or thin structure.

The sintering precursor of the support structure preferably contains materials of the same composition as the materials of the sintering precursor of the three-dimensional object, and the second resin is preferably the same as the first resin. Also, more preferably, the sintering precursor of the support structure contains materials of the same composition as the materials of the sintering precursor of the three-dimensional object, and the amounts of the materials of the sintering precursor of the support structure are the same as the amounts of the materials of the sintering precursor of the three-dimensional object.

In the following, the production method of the three-dimensional object of the present embodiment will be described. The production method of the three-dimensional object of the present embodiment includes a release layer forming step, a sintering step, and a separating step, and may include other steps if necessary.

### <Release Layer Forming Step>

The release layer forming step is a step of forming a release layer between the sintering precursor of the three-dimensional object and the support structure, by an adhesive and a release powder being applied separately. In the release layer forming step, preferably, application of a liquid adhesive or an adhesive that is a liquid composition containing an adhesive component, and application of a release powder are separately performed on the support structure to form the release layer. Also, preferably, the sintering precursor of the three-dimensional object is disposed over the support structure including the release layer formed thereon.

### <<Release Layer>>

The release layer is formed between the sintering precursor of the three-dimensional object, and the support structure. The release layer contains the adhesive and the release powder, and preferably includes an adhesive layer containing the adhesive and a release powder layer containing the release powder. The adhesive layer is formed by applying the adhesive to the support structure or the sintering precursor of the three-dimensional object. Preferably, the adhesive layer is formed by applying the adhesive to the support structure. Also, the release powder layer is formed by applying the release powder to the support structure or the sintering precursor of the three-dimensional object. Preferably, the release powder layer is formed by applying the release powder to the support structure, and more preferably by applying the release powder to the adhesive layer formed on the support structure.

### -Adhesive-

Preferably, the adhesive contained in the release layer of the present embodiment contains an adhesive component and is a liquid. Also, the adhesive contained in the release layer of the present embodiment may be a liquid composition containing a solvent, an additive, or the like, in addition to the adhesive component.

### --Adhesive Component--

The adhesive component may be a solid, a gel, or a liquid. As the adhesive component, it is possible to use a resin, a monomer, or the like that can form a film having adhesiveness or tackiness. It is preferable to use a resin from the viewpoint of stability. Also, as the adhesive component, it may be possible to use a reactive material that is cured after being applied to the support structure or the sintering precursor of the three-dimensional object. The adhesive layer does not need to have strong adhesiveness since it is sufficient to adhere one layer of the release powder layer to the adhesive layer. Thus, an adhesive component having substantially any value of an adhesive force can be used. However, in terms of a 180-degree peel strength, the adhesive force of the adhesive component is preferably 0.001 kN/m or greater and 50 kN/m or less, and more preferably 0.01 kN/m or greater and 1 kN/m or less.

As the resin used as the adhesive component, for example, it is possible to use an acrylic polymer, a rubber-based polymer, or a silicone-based polymer. Specific examples of the resin include terpene-based resins, olefin polymers, cyclopentadiene resins, phenol resins, styrene-based resins, polyamides, alicyclic saturated hydrocarbon resins, aromatic hydrocarbon resins, alicyclic unsaturated hydrocarbon resins, styrene block copolymers, styrene butadiene rubber, ethylene vinyl acetate, neoprene, nitriles, and the like.

Examples of the monomer used as the adhesive component include methyl methacrylate, butyl methacrylate, methacrylic acid, hydroxyethyl methacrylate, ethylene dimethacrylate, urethane-based monomer isocyanate, bisphenol A diglycidyl ether, ethyl cyanoacrylate, methyl cyanoacrylate, a vinyl-based monomer, vinyl acetate, N-vinyl pyrrolidone, glycidyl methacrylate, acrylic acid, a silane-based monomer, and the like.

Examples of the reactive material to be cured used as the adhesive component include acrylate-based and methacrylate-based materials, cyanoacrylate-based materials, epoxy-based materials, isocyanate-based materials, amino-based materials, acrylic acid-based materials, and the like.

The application of the adhesive to the support structure or the sintering precursor of the three-dimensional object is preferably performed using a liquid adhesive or an adhesive that is a liquid composition containing an adhesive component. The adhesive layer is preferably formed of a liquid adhesive or an adhesive that is a liquid composition containing an adhesive component. The liquid adhesive refers to the adhesive component contained in the adhesive being a liquid.

The adhesive layer may be formed by applying a liquid composition containing a solvent, an additive, and the like, in addition to the adhesive component.

### --Solvent--

No particular limitation is imposed on the solvent that can be contained in the liquid composition containing the adhesive component. The solvent may be appropriately selected in accordance with the intended purpose. Examples of the solvent include halogenated solvents, aliphatics, alicyclic substances, aromatics, alcohols, esters, water, ketones, and the like. Specific examples of the solvent include methyl acetate, acetone, ethanol, diacetone alcohol, toluene, cyclohexane, hexane, pentane, dimethyl ether, and the like. These solvents may be used alone or in combination as a mixture.

The solvent contained in the liquid composition containing the adhesive component is preferably a volatile solvent. Thus, the solvent in the liquid composition can be rapidly removed. For example, a solvent having a vapor pressure at 25 degrees Celsius (°C) of 5 kPa or higher and 50 kPa or lower is preferable, and hexane, acetone, n-heptane, isohexane, acetone, toluene, n-pentane, methyl ethyl ketone, cyclohexane, or the like is preferable.

### --Additive--

Examples of the additive that can be contained in the liquid composition containing the adhesive component include reaction initiators, stabilizers (e.g., an antioxidant and an ultraviolet stabilizer), corrosion inhibitors, pigments, dyes, pharmaceuticals, thickeners, and the like. These additives may be used alone or in combination.

An application method of the liquid adhesive or the adhesive that is the liquid composition containing the adhesive component is, for example, a spray method, a roller coating method, a dispenser method, an inkjet method, or the like. Of these, a spray method is preferable. The spray method enables reduction in the amount of the adhesive component to be used, and suppression in large unevenness in the thickness of the adhesive layer. Also, the spray method enables reduction in the amount of the solvent to be applied to the support structure or the sintering precursor of the three-dimensional object. Thus, when the support structure or the sintering precursor of the three-dimensional object contains a component that dissolves into the solvent, it is possible to suppress collapse of the support structure or the sintering precursor of the three-dimensional object due to the solvent. Therefore, when the liquid composition is applied by the spray method to the support structure or the sintering precursor of the three-dimensional object, the degree of freedom in selecting the solvent is increased.

No particular limitation is imposed on the thickness of the adhesive layer as long as the release powder can be adhered to the adhesive layer. The thickness of the adhesive layer is as desired, and is preferably 2 µm or greater and 300 µm or less. No particular limitation is imposed on a coverage of the release layer over an object over which the release layer is to be formed. The coverage may be appropriately selected in accordance with the intended purpose, and is preferably 70% or higher and more preferably 80% or higher.

### -Release Powder-

As the release powder, a release powder having a melting point higher than the melting point of the powder material contained in the sintering precursor is preferable from the viewpoint of suppressing adhesion between the sintering precursor of the three-dimensional object and the support structure in the sintering step.

Examples of the release powder include ceramics and high-melting-point resins. These may be used alone or in combination.

Examples of the ceramics include aluminum nitride, alumina, zirconia, silicon nitride, titanium nitride, boron nitride, silicon oxide, titanium oxide, magnesium oxide, calcium oxide, spinel, zirconium boride, titanium boride, tungsten boride, yttrium oxide, calcium phosphate, scandium oxide, tungsten carbide, titanium carbide, chromium carbide, silicon carbide, and the like. Of these, alumina and zirconia are preferable from the viewpoints of availability and excellent chemical stability in terms of, for example, reactivity with a molding powder and a binder.

No particular limitation is imposed on the high-melting-point resin as long as the high-melting-point resin is a resin having a melting point of 200°C or higher. The high-melting-point resin may be appropriately selected in accordance with the intended purpose. Examples of the high-melting-point resin include polyphenylene sulfide, polyamide-imide, polyether ether ketone, polysulfone, polyimide, polyethersulfone, polybutylene terephthalate, polycarbonate, polytetrafluoroethylene, and the like.

An application method of the release powder is, for example, direct spraying, an aerosol spray method, powder contact, or the like. From the viewpoint of adjusting the amount of the release powder to be applied, an aerosol spray method is preferable. After the application of the release powder, the excess release powder is preferably removed by natural dropping, an air gun, or the like.

**In** the release layer forming step, the application of the adhesive to the support structure or the sintering precursor of the three-dimensional object, and the application of the release powder are separately performed. Each of the applications may be performed only once. However, each of the applications is preferably performed a plurality of times, and more preferably performed alternately a plurality of times. When each of the applications of the adhesive and the release powder is performed a plurality of times, the resulting release layer can have a desired thickness, and the strength and coverage of the release layer can be improved.

Also, when the liquid composition containing the adhesive component is used as the adhesive, preferably, the release powder is applied to the adhesive component left after volatilization or evaporation of the liquid component contained in the liquid composition.

In the release layer forming step, preferably, the adhesive is first applied to the support structure or the sintering precursor of the three-dimensional object, and then the application of the release powder is performed. When the applications of the adhesive and the release powder are alternately performed a plurality of times, more preferably, the adhesive is first applied to the support structure or the sintering precursor of the three-dimensional object and then the application of the release powder is performed, followed by alternating the application of the adhesive and the application of the release powder the same number of times. That is, the release layer forming step may include: an adhesive layer forming step of applying the adhesive to the support structure or the sintering precursor of the three-dimensional object, thereby forming an adhesive layer; and a release powder layer forming step of applying the release powder to the adhesive layer. Also, the release powder layer forming step is preferably performed after the adhesive layer forming step. Preferably, the adhesive layer forming step and the release powder layer forming step are alternately performed a plurality of times. Preferably, the adhesive layer and the release powder layer are alternately formed.

When the application of the adhesive and the application of the release powder are performed a plurality of times, from the viewpoint of increasing the strength of the release layer, each of the applications of the adhesive and the release powder is preferably performed 1 time or more and 30 times or less, and more preferably 2 times or more and 10 times or less. Also, from the viewpoint of increasing the strength of the release layer, the adhesive layer forming step and the release powder layer forming step are preferably performed 1 time or more and 30 times or less, and more preferably 2 times or more and 10 times or less.

The thickness of the release layer is preferably 2 µm or greater and 2 mm or less, more preferably 10 µm or greater and 1 mm or less, and particularly preferably 20 µm or greater and 300 µm or less. When the thickness of the release layer is 2 µm or greater and 2 mm or less, as the sintering precursor of the three-dimensional object and the support structure are fitted into each other, there is no need to set a gap, beyond what is necessary, between the sintering precursor of the three-dimensional object and the support structure, resulting in less influence by design on the shape of the sintering precursor of the three-dimensional object. The thickness of the release layer changes in accordance with change in the number of layers. For example, in the case of one to three layers, the thickness of the release layer changes as follows: 50 µm for one layer, 90 µm for two layers, and 130 µm for three layers.

The release layer forming step only needs to form the release layer between the sintering precursor of the three-dimensional object and the support structure, by the adhesive and the release powder being applied separately. Therefore, it may be possible to dispose the support structure over the sintering precursor of the three-dimensional object including the release layer formed thereon, but it is preferable to dispose the sintering precursor of the three-dimensional object over the support structure including the release layer formed thereon. The description "dispose the support structure over the sintering precursor of the three-dimensional object including the release layer formed thereon" refers to disposing the support structure over a surface of the release layer located opposite to the sintering precursor of the three-dimensional object. Therefore, a case in which the support structure is disposed below the sintering precursor of the three-dimensional object including the release layer formed thereon is also included. The description "dispose the sintering precursor of the three-dimensional object over the support structure including the release layer formed thereon" refers to disposing the sintering precursor of the three-dimensional object over a surface of the release layer located opposite to the support structure. Therefore, a case in which the sintering precursor of the three-dimensional object is disposed below the support structure including the release layer formed thereon is also included.

The sintering precursor of the three-dimensional object for use may be a previously provided sintering precursor of the three-dimensional object, or may be a sintering precursor of the three-dimensional object that is molded in a sintering precursor molding step described below. Also, the support structure for use may be a previously provided support structure, or may be a sintering precursor of the support structure formed in the sintering precursor molding step.

The release layer forming step of the present embodiment can form the release layer having a lesser degree of unevenness in thickness between the sintered body of the three-dimensional object and the support structure. As a result, it is possible to suppress adhesion between the sintered body of the three-dimensional object and the support structure in the sintering step described below. Also, it is possible to easily separate the sintered body of the three-dimensional object and the support structure in the separating step described below.

In the release layer forming step of the present embodiment, direct spraying of the release powder and/or coating of a liquid suspension of the release powder may be performed along with the method of separately applying the adhesive and the release powder to form the release layer between the sintering precursor of the three-dimensional object and the support structure. Examples of the direct spraying of the release powder and/or the coating of the liquid suspension of the release powder include, for example, direct spraying of a ceramic powder bed and/or coating of a ceramic suspension. The direct spraying of the release powder is a method of directly spraying the release powder to the support structure or the sintering precursor of the three-dimensional object without mixing the release powder with a solvent. The coating of the liquid suspension of the release powder is a method of coating a liquid suspension of the release powder suspended in a solution on the support structure or the sintering precursor of the three-dimensional object.

In the release layer forming step of the present embodiment, a region where the method of separately applying the adhesive and the release powder is performed, a region where the direct spraying of the release powder is performed, and a region where the application of the liquid suspension of the release powder is performed may be controlled, if necessary, in accordance with the shapes of the sintering precursor of the three-dimensional object and the support structure. This control may be performed by a three-dimensional object forming device or a control device externally attached to the three-dimensional object forming device. The region where the method of separately applying the adhesive and the release powder is performed is preferably a region of the sintering precursor of the three-dimensional object that includes recessed/projecting portions and an inclination.

### <Sintering Step>

The sintering step is a step of heating the sintering precursor of the three-dimensional object, the support structure, and the release layer, thereby obtaining a sintered body of the three-dimensional object. Since the sintering precursor of the three-dimensional object is heated to be the sintered body in the sintering step, the sintered body of the three-dimensional object can be obtained in the sintering step. The release layer is dried due to heating and formed into powder.

When the sintering precursor of the support structure is used as the support structure, the sintering precursor of the support structure forms into a sintered body due to heating in the sintering step. When the sintering precursor of the support structure is used as the support structure, not only the sintering precursor of the three-dimensional object but also the sintering precursor of the support structure shrink due to heating, which is suitable when sintering the sintering precursor of the three-dimensional object having a complicated or thin structure. Also, the sintering precursor of the support structure containing the powder material contained in the sintering precursor of the three-dimensional object is more suitable when sintering the sintering precursor of the three-dimensional object having a complicated or thin structure.

In the sintering step, it is preferable to form a liquid phase from the powder material forming the sintering precursor of the three-dimensional object since the sintering speed can be increased to complete the sintering step in a short time.

Specifically, a liquid phase is formed in a portion of the powder material forming the sintering precursor when the powder material forming the sintering precursor is heated. The formed liquid phase promotes rearrangement between solid particles and filling of voids between particles through dissolution and precipitation of a solid phase into the liquid phase, resulting in rapid densification and particle bonding.

Due to fluidity of the liquid phase, an uneven thickness of the release layer forms uneven gaps between the sintered body and the support structure, and deformation of the sintered body tends to occur during heating. Alternatively, the liquid phase can flow and pass through a thin portion of the release layer to reach and adhere to the support structure.

By using the release layer in the embodiment of the present disclosure, the gaps between the sintered body and the support structure are allowed to be even, and deformation due to uneven gaps can be suppressed. Also, since there is no unevenness in the thickness of the release layer, adhesion due to the liquid phase can be prevented. When the liquid phase is formed from the powder material, the release powder of the release layer adheres to the surface of the sintered body due to the liquid phase, and thus it is necessary to remove the surface layer through blasting or cutting. However, in the case of an aluminum alloy, the surface hardness is especially small among metals that form the liquid phase in the sintering step, and thus the surface layer can be easily removed and the period required for the removal is reduced. Also, aluminum is easily bonded to oxygen, and a thin oxide film (aluminum oxide) is immediately formed by exposure to air. A newly formed surface of aluminum exposed through removal of the surface layer is immediately covered by the oxide film, and is protected from corrosion during storage until a subsequent step.

### <Separating Step>

The separating step is a step of separating the sintered body of the three-dimensional object and the support structure. By separating the sintered body of the three-dimensional object from the support structure, the intended three-dimensional object can be obtained.

Since the three-dimensional object produced according to the present embodiment is a sintered body, the term "three-dimensional object" refers to a three-dimensional object that is a sintered body. In the present specification, the three-dimensional object may be referred to as a "sintered body of a three-dimensional object". Therefore, the "three-dimensional object" or the "sintered body of a three-dimensional object" can be distinguished from a "sintering precursor of a three-dimensional object".

When the support structure used in the release layer forming step is the sintering precursor, the support structure forms into a sintered body by performing the sintering step. Thus, the support structure separated in the separating step is a sintered body.

### <Other Steps>

The production method of the three-dimensional object of the present embodiment may further include other steps if necessary.

For example, the production method of the three-dimensional object according to the present embodiment may include, for example, a sintering precursor molding step of molding a sintering precursor, in addition to the above-described steps. Examples of the other steps include a cutting step, a polishing step, a mold forming step, and the like, in addition to the sintering precursor molding step.

### <<Sintering Precursor Molding Step>>

The sintering precursor molding step is a step of molding a sintering precursor before the release layer forming step. The sintering precursor molding step may be performed by a known production device. By performing the sintering precursor molding step before the release layer forming step, the sintering precursor molded in the sintering precursor molding step can be used in the release layer forming step. Also, the sintering precursor molding step may mold the support structure in the release layer forming step, in addition to the sintering precursor.

Also, in the sintering precursor molding step, the sintering precursor is preferably molded by a binder jetting method. Also, the sintering precursor molding step may include a powder layer forming step of forming a powder layer, a molding liquid applying step of applying a molding liquid, a drying step of drying a sintering precursor, an excess powder removing step of removing excess powder, and the like. These steps may be performed using a device or the like including members configured to perform each step, a sintering precursor producing device, a three-dimensional object producing device, or the like.

### <<Powder Layer Forming Step>>

The powder layer forming step is a step of laminating a powder material to form a powder layer.

The powder layer can be formed by transferring the powder material from a powder tank. A transfer member configured to transfer the powder material is a recoat roller, a hopper, or the like.

When the powder material is transferred from a supply tank to a molding tank using the recoat roller, the powder material is transferred and flattened by the recoat roller. In this case, the powder material is transferred from the supply tank into the molding tank using the recoat roller. Specifically, the powder material is transferred onto a molding stage disposed to be vertically movable while sliding over the inner wall of the molding tank.

When the powder material is transferred into the molding tank using the hopper, the powder material is transferred into the molding tank using the hopper from above the molding tank. When the hopper is used as the transfer member, a predetermined amount of the powder material can be transferred into the molding tank, and flattening is not required after the transfer.

### -Powder Material-

The powder material used in the powder layer forming step can be the same as the powder material described in the section <Sintered Body and Sintering Precursor>.

### <<<Molding Liquid Applying Step>>>

The molding liquid applying step is a step of applying a molding liquid for solidifying the powder material to the powder material. The molding liquid applying step is performed by a molding liquid applying member.

As a specific method of applying the molding liquid to the powder material, a method of discharging the molding liquid for application is preferable and is, for example, a dispenser method, a spray method, an inkjet method, or the like.

### -Molding Liquid-

The molding liquid contains an organic solvent and is substantially free of water, and may further contain other components if necessary. When the powder material contains no resin, the molding liquid preferably contains a resin. When the powder material is coated by a resin, the molding liquid may be free of the resin.

The molding liquid is substantially free of water. In the present specification, "substantially free of water" means that the amount of water is 10% by mass or less relative to the total amount of the molding liquid. The amount of water contained in the molding liquid is preferably 5% by mass or less, more preferably 3% by mass or less, and still more preferably 1% by mass or less. Particularly preferably, the molding liquid is free of water. The molding liquid substantially free of water provides increased solubility of the resin contained in the molding liquid, and thus the viscosity of the molding liquid can be further reduced.

The viscosity of the molding liquid at 25°C is preferably 5 mPa·s or higher and 50 mPa·s or lower, more preferably 5 mPa·s or higher and 40 mPa·s or lower, and still more preferably 5 mPa·s or higher and 30 mPa·s or lower. The viscosity can be measured, for example, in accordance with JIS K7117. This provides stabilized discharge of the molding liquid, further increased bending strength of the sintering precursor before sintering, and improved dimensional accuracy. The surface tension of the molding liquid at 25°C is preferably 40 mN/m or lower, and more preferably 10 mN/m or higher and 30 mN/m or lower. The surface tension can be measured, for example, with DY-300 available from Kyowa Interface Science Co., Ltd. This provides stabilized discharge of the molding liquid, further increased bending strength of the sintering precursor before sintering, and improved dimensional accuracy.

### --Resin in Molding Liquid--

The resin contained in the molding liquid functions as a binder, and thus preferably has high affinity with the powder material and has an adhesive effect. Such a resin adheres to the powder material, thereby further increasing the strength of the obtained sintering precursor and improving resistance to a solvent. The resin contained in the molding liquid may be any resin as long as the resin can dissolve in the molding liquid. Preferably, the resin contained in the molding liquid has low solubility in water and is soluble in an organic solvent.

No particular limitation is imposed on the resin contained in the molding liquid as long as the solubility in water is 0.5 (g/100 g-H₂O) or less (0.5 g or less of the resin is dissolved in 100 g of water of 25°C). Examples of the resin contained in the molding liquid include acrylic resins, acrylic polyol resins, polyester resins, epoxy resins, polyol resins, urethane resins, polyether resins, polyvinyl butyral resins, polyvinyl acetal resins, polyvinyl chloride resins, polyvinyl acetate resins, paraffin-based resins, olefin-based resins, ethyl cellulose, and the like. Also, no particular limitation is imposed on the resin contained in the molding liquid as long as the resin can dissolve in the molding liquid. The resin contained in the molding liquid may be a homopolymer or heteropolymer (copolymer). Alternatively, the resin contained in the molding liquid may be modified or may include a publicly known functional group. These may be used alone or in combination.

### --Organic Solvent in Molding Liquid--

No particular limitation is imposed on the organic solvent contained in the molding liquid as long as the organic solvent can dissolve the resin. The organic solvent contained in the molding liquid may be appropriately selected in accordance with the intended purpose. Examples of the organic solvent contained in the molding liquid include aliphatic compounds, aromatic compounds, ketones, esters, sulfoxides, and the like. Examples of the aliphatic compound contained in the molding liquid include alcohol, ethylene glycol, and the like. Examples of the aromatic compound contained in the molding liquid include toluene, xylene, and the like. Examples of the ketone contained in the molding liquid include acetone, methyl ethyl ketone, and the like. Examples of the ester contained in the molding liquid include butyl acetate, ethyl acetate, propylene acetate, methyl acetate, diethyl succinate, and the like. Examples of the sulfoxide contained in the molding liquid include dimethyl sulfoxide and the like.

No particular limitation is imposed on the organic solvent contained in the molding liquid. Examples of the organic solvent contained in the molding liquid include γ-butyrolactone, propylene carbonate, cyclohexanone, diethylene glycol dimethyl ether, triethylene glycol dimethyl ether, and the like. Other examples include n-octane, m-xylene, solvent naphtha, diisobutyl ketone, 3-heptanone, 2-octanone, acetylacetone, butyl acetate, amyl acetate, n-hexyl acetate, n-octyl acetate, ethyl butyrate, ethyl valerate, ethyl caprylate, ethyl octanoate, ethyl acetoacetate, ethyl 3-ethoxypropionate, diethyl oxalate, diethyl malonate, diethyl succinate, diethyl adipate, bis 2-ethylhexyl maleate, triacetin, tributyrin, propylene glycol monomethyl ether acetate, ethylene glycol monobutyl ether acetate, dibutyl ether, 1,2-dimethoxybenzene, 1,4-dimethoxybenzene, diethylene glycol monobutyl ether, diethylene glycol dimethyl ether, triethylene glycol dimethyl ether, 2-methoxy-1-methylethyl acetate, γ-butyrolactone, propylene carbonate, cyclohexanone, butyl cellosolve, and the like. These may be used alone or in combination.

The amount of the organic solvent contained in the molding liquid is preferably 30% by mass or more and 90% by mass or less, and more preferably 50% by mass or more and 80% by mass or less, relative to the total amount of the molding liquid. When the amount of the organic solvent contained in the molding liquid is 30% by mass or more and 90% by mass or less, the solubility of the resin contained in the molding liquid is increased, and the strength of the sintering precursor and the sintered body obtained by sintering the sintering precursor can be increased. Also, the nozzle is prevented from drying when the device is not in operation (when the device is on standby), enabling suppression in liquid clogging and misfiring.

### <<<Drying Step>>>

The drying step is a step of drying the sintering precursor. In the drying step, not only the liquid component contained in the sintering precursor, but also organic substances may be removed (debinding). A drying method in the drying step is, for example, a method of performing drying in a publicly known dryer.

### <<<Excess Powder Removing Step>>>

The excess powder removing step is a step of removing excess powder adhering to the sintering precursor. An excess powder removing method in the excess powder removing step is, for example, a method of removing excess powder by air blowing.

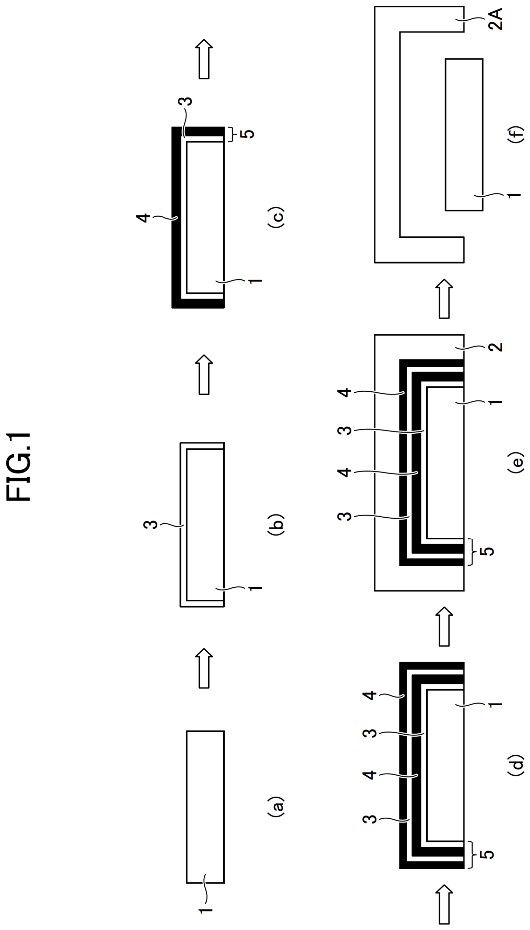

An embodiment of the production method of the three-dimensional object according to the present embodiment will be described with reference to FIGS. 1 to 4.

FIG. 1 is a schematic diagram for describing an example of the production method of the three-dimensional object according to the embodiment of the present disclosure. First, a support structure 1 is provided ((a) of FIG. 1). Subsequently, an adhesive layer 3 is formed, for example, by applying a liquid adhesive component or a liquid composition containing an adhesive component to a surface of the support structure 1 with which a sintering precursor 2 of the three-dimensional object is to overlap ((b) of FIG. 1). When using a liquid composition containing a liquid component, such as a solvent or the like, in addition to the adhesive component, it is preferable to dry the liquid component, such as the solvent or the like, to form the adhesive layer.

Subsequently, a release powder is applied to the adhesive layer 3 to form a release powder layer 4 ((c) of FIG. 1). Also, the adhesive layer 3 is formed over the formed release powder layer 4 in the same manner as described above, and the release powder is applied to the adhesive layer 3 to form the release powder layer 4, thereby forming a release layer 5 including the adhesive layers 3 and the release powder layers 4 ((d) of FIG. 1). Although (d) of FIG. 1 illustrates the release layer 5 in which the two adhesive layers 3 and the two release powder layers 4 are alternately laminated, the number of layers to be laminated can be appropriately changed.

The sintering precursor 2 of the three-dimensional object is disposed over the release layer 5 formed over the support structure 1, i.e., over a surface of the release layer 5 opposite to the surface of the release layer 5 in contact with the support structure 1 ((e) of FIG. 1). There may be a gap between the release layer 5 and the sintering precursor 2 of the three-dimensional object.

Subsequently, by performing the sintering step of heating the support structure 1, the sintering precursor 2 of the three-dimensional object, and the release layer 5, the sintering precursor 2 of the three-dimensional object is sintered to be a sintered body, and the release layer 5 is dried into powder. Subsequently, a sintered body 2A of the three-dimensional object and the support structure 1 are separated to obtain a three-dimensional object that is the sintered body 2A ((f) of FIG. 1).

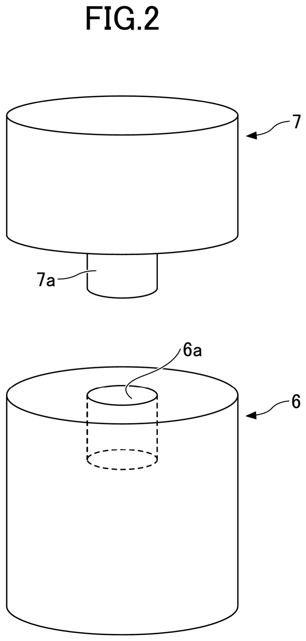

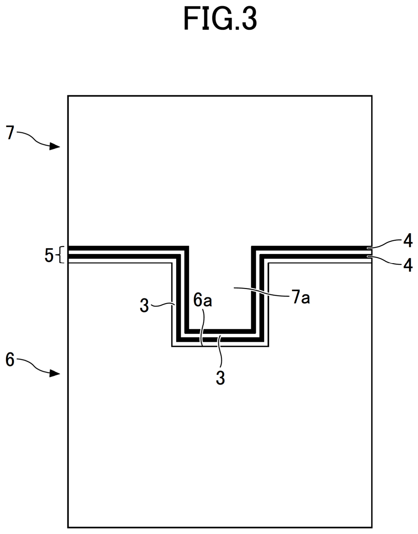

FIG. 2 is a schematic diagram illustrating an example of a combination of the support structure and the sintering precursor of the three-dimensional object in the production method of the three-dimensional object according to the embodiment of the present disclosure. FIG. 3 is a schematic cross-sectional diagram illustrating a state in which the release layer is formed between the support structure and the sintering precursor of the three-dimensional object illustrated in FIG. 2, and the sintering precursor of the three-dimensional object is disposed over the support structure.

FIG. 2 illustrates a sintering precursor 7 of the three-dimensional object including a projection 7a and a support structure 6 including a recess 6a. FIG. 3 is a schematic cross-sectional diagram illustrating a state in which the release layer 5 including the two adhesive layers 3 and the two release powder layers 4 alternately laminated is formed between the support structure 6 and the sintering precursor 7 of the three-dimensional object illustrated in FIG. 2, and the sintering precursor 7 of the three-dimensional object is disposed over the support structure 6. Although the release layer 5 illustrated in FIG. 3 includes the two adhesive layers 3 and the two release powder layers 4 alternately laminated, the number of layers to be laminated can be appropriately changed.

The sintering precursor 7 of the three-dimensional object is disposed over the support structure 6 such that the projection 7a of the sintering precursor 7 of the three-dimensional object is fitted into the recess 6a of the support structure 6. In this manner, it is possible to form the release layer 5, which is resistant to collapse and has a small variation in thickness, between the support structure 6 and the sintering precursor 7 of the three-dimensional object. This can sufficiently suppress adhesion between the support structure 6 and the sintering precursor 7 of the three-dimensional object, and improve the sintering stability. Although FIGS. 2 and 3 illustrate a case in which the sintering precursor 7 of the three-dimensional object is disposed over the support structure 6 after the formation of the release layer 5 over the support structure 6, there may be a gap between the release layer 5 and the sintering precursor 7 of the three-dimensional object.

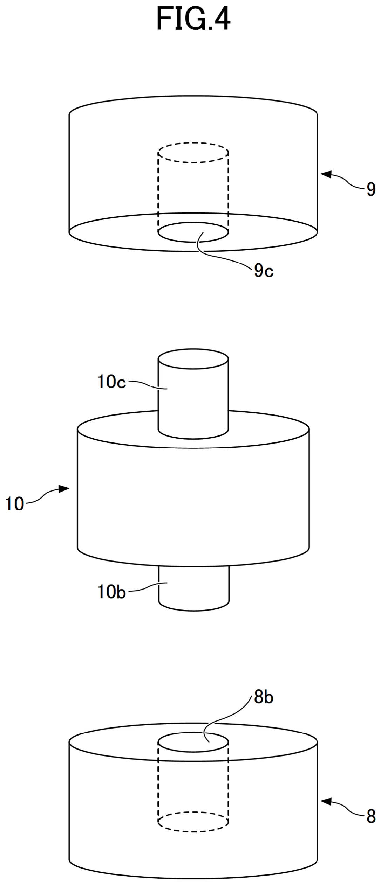

FIG. 4 is a schematic diagram illustrating another example of the combination of the support structure and the sintering precursor of the three-dimensional object in the production method of the three-dimensional object according to the embodiment of the present disclosure. FIG. 4 illustrates a sintering precursor 10 of the three-dimensional object including a projection 10b and a projection 10c, a support structure 8 including a recess 8b, and a support structure 9 including a recess 9c. The support structure 8 has a mold shape of the projection 10b of the sintering precursor 10 of the three-dimensional object, or a shape close to this mold shape. Specifically, the support structure 8 has a structure in which the projection 10b can fit into the recess 8b. Also, the support structure 9 has a mold shape of the projection 10c of the sintering precursor 10 of the three-dimensional object, or a shape close to this mold shape. Specifically, the support structure 9 has a structure in which the projection 10c can fit into the recess 9c.

Before sintering the sintering precursor 10 of the three-dimensional object, the release layer is formed between the support structure 8 and the sintering precursor 10 of the three-dimensional object, and between the sintering precursor 10 of the three-dimensional object and the support structure 9. Specifically, for example, the release layer is formed over a surface of the support structure 8 to overlap with the sintering precursor 10 of the three-dimensional object, and over a surface of the support structure 9 to overlap with the sintering precursor 10 of the three-dimensional object. Alternatively, for example, the release layer is formed over surfaces of the sintering precursor 10 of the three-dimensional object to overlap with the support structure 8 and the support structure 9. Then, for disposing the sintering precursor 10 of the three-dimensional object over the support structures 8 and 9, the sintering step is performed in a state in which the projection 10b is fitted into the recess 8b and the projection 10c is fitted into the recess 9c.

### EXAMPLES

Hereinafter, the present embodiment will be described in more detail by way of Examples. The present embodiment is not limited to these Examples.

### <Sintering Precursor Molding Step>

For producing a sintering precursor of a three-dimensional object and a sintering precursor of a support structure, the following powder material and molding liquid were provided, and the sintering precursors were produced by a binder jetting method.

### -Materials of Sintering Precursor-

AlSi10Mg1 (obtained from Toyo Aluminium K.K., Si10Mg-30BB, volume average particle diameter: 35 µm) was used as a powder material. A molding liquid for use was a solution prepared by mixing 13.4 parts by mass of a vinyl acetate resin (JMR-10LL, obtained from JAPAN VAM & POVAL CO., LTD.), 86.5 parts by mass of triethylene glycol dimethyl ether, and 0.1 parts by mass of a silicone surfactant (KF-353, obtained from Shin-Etsu Chemical Co., Ltd.). After a sintering precursor was produced from the above powder material and molding liquid using a binder jetting (BJ) device, an excess powder was removed. This molds the powder material into an intended shape, thereby producing the sintering precursor of the three-dimensional object. Also, the sintering precursor of the support structure was produced in the same manner as in the production of the sintering precursor of the three-dimensional object, i.e., by molding the above powder material into an intended shape.

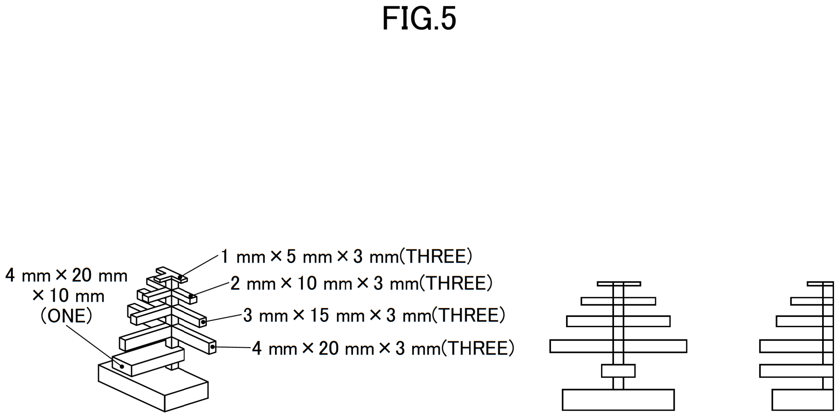

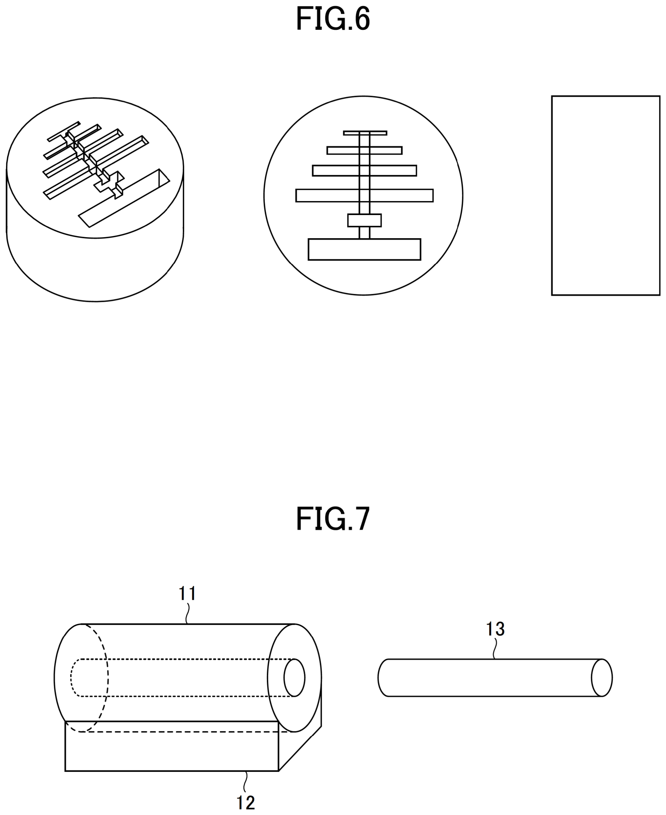

The sintering precursor of the three-dimensional object was molded to have a plurality of rectangular parallelepiped portions. The dimensions of the rectangular parallelepiped portions included in the sintering precursor of the three-dimensional object were 1 mm×5 mm×3 mm, 2 mm×10 mm×3 mm, 3 mm×15 mm×3 mm, 4 mm×20 mm×3 mm, and 4 mm×20 mm×10 mm. FIG. 5 is a diagram illustrating a shape of the sintering precursor of the three-dimensional object, and this diagram includes a three-dimensional view, a front view, and a side view in order from left to right. Also, the sintering precursor of the support structure was molded to have a shape close to the mold shape of the sintering precursor of the three-dimensional object. FIG. 6 is a diagram illustrating a shape of the sintering precursor of the support structure, and this diagram includes a three-dimensional view, a front view, and a side view in order from left to right. This structure having a shape close to the mold shape of the sintering precursor of the three-dimensional object was molded such that a gap of 0.4 mm or more and 0.8 mm or less would be formed between the sintering precursor of the three-dimensional object and the sintering precursor of the support structure, when the structure is disposed such that all the rectangular parallelepiped portions of the sintering precursor of the three-dimensional object would be fitted into the structure.

The produced sintering precursor of the three-dimensional object and the produced sintering precursor of the support structure were maintained at 50°C for 4 hours and then at 100°C for 10 hours, followed by drying. Subsequently, the temperature was increased to 450°C for 2 hours in a nitrogen atmosphere using a dryer, and then maintained at 450°C for 2 hours to remove the resin from the sintering precursor of the three-dimensional object and the sintering precursor of the three-dimensional object (degreasing step). Excess powder on each sintering precursor was removed by air blowing (excess powder removing step).

### <Release Layer Forming Step>

As described below, (1) a liquid composition containing an adhesive component and (2) a release powder were provided.

### -Materials of Release Layer-

### (1) Adhesive (a liquid composition containing an adhesive component, solvents, and additives)

- Adhesive component: 20 parts by mass of styrene-butadiene rubber (JSR Corporation)
- Solvents: 43 parts by mass of hexane (Resonac Corporation), 24.4 parts by mass of acetone (Mitsubishi Chemical Corporation), and 10 parts by mass of normal heptane (FUJIFILM Wako Pure Chemical Corporation)
- Additives: 0.1 parts by mass of butylated hydroxytoluene (BHT) (BASF Japan Ltd.), 2 parts by mass of Aerosil 200 (Evonik Japan Co., Ltd.), and 0.5 parts by mass of tridecyl alcohol ethoxylate (Kao Corporation)

### (2) Release powder

### Zirconia powder 30 µm in diameter (melting point: 2,700°C, YTZ-0.03, obtained from Nikkato Corporation)

### (Example 1)

An adhesive layer was formed over a surface of the sintering precursor of the support structure to overlap with the sintering precursor of the three-dimensional object, produced in the above sintering precursor molding step, by applying the above (1) adhesive to the surface by a spray method, followed by drying. Subsequently, a release layer was formed by spraying and applying the above (2) release powder to completely cover the formed adhesive layer, followed by removal of the excess release powder. Also, an adhesive layer was formed over the formed release layer by applying the above (1) adhesive to the release layer by a spray method, followed by drying. Further, a release layer was formed by spraying and applying the above (2) release powder to completely cover the formed adhesive layer, followed by removal of the excess release powder. This process produced the sintering precursor of the support structure in which the release layer including the two adhesive layers and the two release powder layers alternately laminated was formed over the surface to overlap with the sintering precursor of the three-dimensional object.

The sintering precursor of the three-dimensional object was disposed over the sintering precursor of the support structure including the release layer formed thereon. Since the sintering precursor of the support structure had a structure having a shape close to the mold shape of the sintering precursor of the three-dimensional object, the sintering precursor of the three-dimensional object was disposed over the sintering precursor of the support structure such that all the rectangular parallelepiped portions of the sintering precursor of the three-dimensional object would be fitted into the structure of the sintering precursor of the three-dimensional object.

### <Sintering Step>

The sintering precursor of the support structure including the release layer formed thereon, and the sintering precursor of the three-dimensional object, which were disposed as described above, were heated for sintering at 580°C in a sintering furnace in vacuum to obtain a sintered body to be the three-dimensional object. The sintering precursor of the support structure was also sintered to be a sintered body.

### <Separating Step>

After completion of the sintering step, the sintered body of the three-dimensional object and the sintered body of the support structure were separated. Table 1 shows the results of a separation evaluation.

### (Example 2)

The sintering step and the separating step were performed in the same manner as in Example 1, except that a single release layer (a combination of one adhesive layer and one release powder layer) was formed over the sintering precursor of the support structure in the release layer forming step of Example 1,.

### (Example 3)

A sintering precursor 11 of a three-dimensional object, a support structure 12, and a support structure (insert) 13, each having a shape illustrated in FIG. 7, were used. Formation of the release layer between the sintering precursor of the three-dimensional object and the support structure and between the sintering precursor of the three-dimensional object and the support structure (insert) was performed in the same manner as in Example 1, followed by performing the sintering step and the separating step. That is, the number of the formed release layers was 2.

### (Example 4)

The sintering step and the separating step were performed in the same manner as in Example 3 except that, unlike in Example 3, a single release layer (a combination of one adhesive layer and one release powder layer) was formed.

### (Example 5)

The sintering step and the separating step were performed in the same manner as in Example 3 except that, unlike in Example 3, three release layers were formed.

### (Example 6)

The sintering step and the separating step were performed in the same manner as in Example 3 except that, unlike in Example 3, four release layers were formed.

### (Comparative Example 1)

The sintering step and the separating step were performed in the same manner as in Example 1, except that the adhesive layer was not formed over the sintering precursor of the support structure, and the release powder was sprayed and applied in the release layer forming step of Example 1.

### (Comparative Example 2)

The sintering step and the separating step were performed in the same manner as in Example 1, except that the adhesive and the release powder were mixed into a liquid suspension and the liquid suspension was applied over the sintering precursor of the support structure using a dispenser in the release layer forming step of Example 1.

A separation evaluation and a shape reproducibility evaluation of the sintered body were performed on Examples 1 to 6 and Comparative Examples 1 and 2. Table 1 shows the results of the separation evaluation and the shape reproducibility evaluation of the sintered body. The separation evaluation was performed in accordance with the following evaluation criteria based on the observation of the state in the separating step. When the support structure (insert) was used, both the separation evaluation from the support structure and the separation evaluation from the support structure (insert) were performed.

### -Evaluation Criteria for Separation Evaluation-

A: The sintered body of the three-dimensional object and the sintered body of the support structure can be easily separated.
B: A portion of the sintered body of the three-dimensional object and a portion of the sintered body of the support structure are bonded, but the sintered body of the three-dimensional object and the sintered body of the support structure can be separated.
C: The sintered body of the three-dimensional object and the sintered body of the support structure are bonded in a large area, and cannot be separated.

The shape reproducibility of the sintered body was evaluated in accordance with the following evaluation criteria. In Comparative Examples 1 and 2, the sintered body of the three-dimensional object and the sintered body of the support structure could not be separated, and the shape reproducibility of the sintered body could not be evaluated.

### -Determination Criteria for Reproducibility Evaluation of Sintered Body-

A: No deformation is visually observed.
B: Significant deformation is not visually observed, and deformation of 5% to 10% or more from the intended dimensions is confirmed through measurement with calipers.
C: Deformation can be visually confirmed.

**Table 1**

| | Formation method of release layer | Presence or absence of support structure (insert) | Number of release layers | Separation evaluation | | Shape reproducibility of sintered body | Thickness of release layer (µm) | Coverage of release layer (%) |
|---|---|---|---|---|---|---|---|---|
| | | | | Support structure | Support structure (insert) | | | |
| Ex. 1 | Separately apply adhesive and release powder | Absent | 2 | A | - | B | 89.7 | 98.8 |
| Ex. 2 | Separately apply adhesive and release powder | Absent | 1 | B | - | A | 48.6 | 89.7 |
| Ex. 3 | Separately apply adhesive and release powder | Present | 2 | A | A | B | 89.7 | 98.8 |
| Ex. 4 | Separately apply adhesive and release powder | Present | 1 | B | B | A | 48.6 | 89.7 |
| Ex. 5 | Separately apply adhesive and release powder | Present | 3 | A | B | C | 129.3 | 100.0 |
| Ex. 6 | Separately apply adhesive and release powder | Present | 4 | A | B | C | 170.0 | 100.0 |
| Comp. Ex. 1 | Apply release powder only | Absent | - | C | - | - | - | - |
| Comp. Ex. 2 | Apply liquid suspension of adhesive and release powder | Absent | - | C | - | - | - | - |

As described above, it has been found that the present disclosure can provide the production method of the three-dimensional object in which adhesion of the three-dimensional object to the support structure during sintering is suppressed, and deformation and/or collapse of the three-dimensional object is prevented. Note that, in Table 1, "Ex." stands for "Example" and "Comp. Ex." stands for "Comparative Example".

The present embodiments are, for example, as follows.
<1> A production method of a three-dimensional object, the production method including:
   a release layer forming step of forming a release layer between a sintering precursor of the three-dimensional object and a support structure, by an adhesive and a release powder being applied separately;
   a sintering step of heating the sintering precursor of the three-dimensional object, the support structure, and the release layer, thereby obtaining a sintered body of the three-dimensional object; and
   a separating step of separating the sintered body of the three-dimensional object and the support structure.
<2> The production method according to <1>, wherein
   in the release layer forming step, the application of the adhesive and the application of the release powder are performed on the support structure, thereby forming the release layer over the support structure, and
   the sintering precursor of the three-dimensional object is disposed over the support structure including the release layer formed thereon.
<3> The production method according to <1> or <2>, wherein
   the sintering precursor of the three-dimensional object contains a first resin and a first powder material.
<4> The production method according to <3>, wherein
   a melting point of the release powder is higher than a melting point of the first powder material contained in the sintering precursor of the three-dimensional object.
<5> The production method according to <3>, wherein
   the support structure contains a second resin and a second powder material.
<6> The production method according to <5>, wherein
   the first powder material is the same as the second powder material.
<7> The production method according to <1>, <2>, <3>, <4>, <5>, or <6>, wherein
   in the release layer forming step, a liquid composition containing an adhesive component and a volatile solvent is applied as the adhesive.
<8> The production method according to <7>, wherein
   in the release layer forming step, the liquid composition containing the adhesive component and the volatile solvent is applied by a spray method.
<9> The production method according to <1>, <2>, <3>, <4>, <5>, <6>, <7>, or <8>, wherein
   in the release layer forming step, the application of the adhesive and the application of the release powder are alternately performed a plurality of times.
<10> The production method according to <1>, <2>, <3>, <4>, <5>, <6>, <7>, <8>, or <9>, further including:
   before the release layer forming step, a sintering precursor molding step of molding the sintering precursor of the three-dimensional object by a binder jetting method.
<11> The production method according to <1>, <2>, <3>, <4>, <5>, <6>, <7>, <8>, <9>, or <10>, wherein
   the sintering precursor of the three-dimensional object contains a metal.
<12> The production method according to <1>, <2>, <3>, <4>, <5>, <6>, <7>, <8>, <9>, <10>, or <11>, wherein
   the release powder contains ceramics.
<13> The production method according to <1>, <2>, <3>, <4>, <5>, <6>, <7>, <8>, <9>, <10>, <11>, or <12>, wherein
   in the sintering step, a liquid phase is formed from a powder material forming the sintering precursor of the three-dimensional object.
<14> The production method according to <1>, <2>, <3>, <4>, <5>, <6>, <7>, <8>, <9>, <10>, <11>, <12>, or <13>, wherein
   in the sintering step, a powder material forming the sintering precursor of the three-dimensional object is an aluminum alloy.

According to the production method of the three-dimensional object according to any one of the above <1> to <14>, it is possible to solve various problems and achieve the object of the present disclosure.

### REFERENCE SIGNS LIST

- 1: Support structure
- 2: Sintering precursor of three-dimensional object
- 2A: Three-dimensional object that is sintered body
- 3: Adhesive layer
- 4: Release powder layer
- 5: Release layer
- 6: Support structure
- 6a: Recess of support structure
- 7: Sintering precursor of three-dimensional object
- 7a: Recess of sintering precursor of three-dimensional object
- 8: Support structure
- 8b: Recess of support structure
- 9: Support structure
- 9c: Recess of support structure
- 10: Sintering precursor of three-dimensional object
- 10b,10c: Projection sintering precursor of three-dimensional object
- 11: Sintering precursor of three-dimensional object
- 12: Support structure
- 13: Support structure (insert)

## Claims

1. A production method of a three-dimensional object, the production method comprising:
a release layer forming step of forming a release layer between a sintering precursor of the three-dimensional object and a support structure, by an adhesive and a release powder being applied separately;
a sintering step of heating the sintering precursor of the three-dimensional object, the support structure, and the release layer, thereby obtaining a sintered body of the three-dimensional object; and
a separating step of separating the sintered body of the three-dimensional object and the support structure.

2. The production method according to claim 1, wherein
in the release layer forming step, the application of the adhesive and the application of the release powder are performed on the support structure, thereby forming the release layer over the support structure, and
the sintering precursor of the three-dimensional object is disposed over the support structure including the release layer formed thereon.

3. The production method according to claim 1 or 2, wherein
the sintering precursor of the three-dimensional object contains a first resin and a first powder material.

4. The production method according to claim 3, wherein
a melting point of the release powder is higher than a melting point of the first powder material contained in the sintering precursor of the three-dimensional object.

5. The production method according to claim 3, wherein
the support structure contains a second resin and a second powder material.

6. The production method according to claim 5, wherein
the first powder material is the same as the second powder material.

7. The production method according to any one of claims 1 to 6, wherein
in the release layer forming step, a liquid composition containing an adhesive component and a volatile solvent is applied as the adhesive.

8. The production method according to claim 7, wherein
in the release layer forming step, the liquid composition containing the adhesive component and the volatile solvent is applied by a spray method.

9. The production method according to any one of claims 1 to 8, wherein
in the release layer forming step, the application of the adhesive and the application of the release powder are alternately performed a plurality of times.

10. The production method according to any one of claims 1 to 9, further comprising:
before the release layer forming step, a sintering precursor molding step of molding the sintering precursor of the three-dimensional object by a binder jetting method.

11. The production method according to any one of claims 1 to 10, wherein
the sintering precursor of the three-dimensional object contains a metal.

12. The production method according to any one of claims 1 to 11, wherein
the release powder contains ceramics.

13. The production method according to any one of claims 1 to 12, wherein
in the sintering step, a liquid phase is formed from a powder material forming the sintering precursor of the three-dimensional object.

14. The production method according to any one of claims 1 to 13, wherein
in the sintering step, a powder material forming the sintering precursor of the three-dimensional object is an aluminum alloy.
